# EUROPEAN PATENT SPECIFICATION

(11) **EP 4 358 279 B1**
(45) Date of publication and mention of the grant of the patent: **04.11.2026**
(21) Application number: 22825364.7
(22) Date of filing: 16.06.2022
(51) Int. Cl.: H01M 50/533, H01M 50/586, H01M 50/528, H01M 50/107, H01M 50/534

(54) **ELECTRODE TAB ASSEMBLY AND SECONDARY BATTERY COMPRISING SAME**
ELEKTRODENLASCHENANORDNUNG UND SEKUNDÄRBATTERIE DAMIT
ENSEMBLE LANGUETTE D'ÉLECTRODE ET BATTERIE SECONDAIRE LE COMPRENANT

(30) Priority: 18.06.2021 KR 20210079631; 14.06.2022 KR 20220072368
(43) Date of publication of application: 24.04.2024
(60) Divisional application: 26150938.4 / 4 718 621
(73) Proprietor: LG Energy Solution, Ltd., Seoul 07335 (KR)
(72) Inventor: LEE, Ha Na, Daejeon 34122 (KR)
(74) Representative: Goddar, Heinz J.
(86) International application number: PCT/KR2022/008573
(87) International publication number: WO 2022/265441

(56) References cited:
- JP-A- 2018 037 398
- JP-A- 2018 037 398
- KR-A- 20090 076 278
- KR-A- 20150 050 210
- KR-A- 20180 106 367
- KR-B1- 101 101 046
- KR-B1- 101 101 046
- US-A1- 2009 136 840

## Description

### TECHNICAL FIELD

### CROSS-REFERENCE TO RELATED APPLICATION

The present application claims the benefit of the priority of Korean Patent Application Nos. 10-2021-0079631, filed on June 18, 2021, and 10-2022-0072368, filed on June 14, 2022.

### TECHNICAL FIELD

The present invention relates to an electrode tab assembly and a secondary battery including the same, and more particularly, to an electrode tab assembly capable of preventing an electrode tab from being deformed and a secondary battery including the same.

### BACKGROUND ART

In general, secondary batteries mean batteries that are chargeable and dischargeable unlike primary batteries that are not chargeable, and the secondary batteries are widely used in electronic devices such as mobile phones, notebook computers, camcorders, and the like, electric vehicles, or the like. Particularly, since a lithium secondary battery has larger capacity than a nickel-cadmium battery or a nickel-hydrogen battery and has a high energy density per unit weight, a degree of its utilization is rapidly increasing.

Such a secondary battery is classified into a can type secondary battery in which an electrode assembly is built in a metal can and a pouch type secondary battery in which an electrode assembly is built in a pouch. The can type secondary battery includes an electrode assembly, a can accommodating the electrode assembly, and a cap assembly mounted in an opening of the can. The electrode assembly has a structure in which an electrode and a separator are wound in a jelly-roll form. The electrode includes a positive electrode and a negative electrode. The positive electrode is connected to a cap assembly through a positive electrode tab, and the negative electrode is connected to a can through a negative electrode tab. Here, the positive electrode tab and the negative electrode tab are provided as electrode tabs.

The secondary battery having such a structure has a problem in that the electrode tab is folded during a transfer process or depending on an evaluation angle when a manufacturing process is performed, or safety is evaluated, or the electrode tab is in contact with an electrode/destroyed, resulting in short circuit, explosion, and ignition.

The prior art relevant to the present invention is given by US 2009/136840 A1, KR 101 101 046 B1, and JP 2018 037398 A.

In the prior art, document US2009-136840 A1 discloses Secondary battery including an electrode assembly including: a first electrode plate connected to a first electrode tab, a second electrode plate connected to a second electrode tab, and a separator disposed therebetween; a can having an opening, to house the electrode assembly; and a cap assembly to seal the opening. The first electrode tab has a reinforcement portion. The first electrode tab has a welding portion connected to the cap assembly and a bent portion formed in the reinforcement portion, which is thicker than the welding portion.

Documents KR 10-1101046 B1 and JP 2018-037398 A disclose other examples of secondary battery with electrode assembly.

### DISCLOSURE OF THE INVENTION

### TECHNICAL PROBLEM

The present invention is defined according to the subject matter of the appended independent claims. Particular embodiments are given by the features of the dependent claims.

The present invention is to solve the above problem, and an object of the present invention is to provide a secondary battery, in which a structure of an electrode tab is improved to reinforce strength of the electrode tab, thereby preventing the electrode tab from being deformed such as being folded or destroyed, resulting in preventing short circuit, explosion, and ignition from occurring, and a secondary battery including the same.

### TECHNICAL SOLUTION

An electrode tab assembly of the present invention is defined by the features of claim 1.

The one reinforcing piece and the other reinforcing piece may have a symmetrical shape with respect to the electrode tab.

The one top surface and the other top surface may be coupled to each other to cover the top surface of the side portion, the one bottom surface and the other bottom surface may be coupled to each other to cover the bottom surface of the side portion, and the one side surface and the other side surface may be coupled to each other to cover the side surface of the side portion.

The electrode tab may include a central portion and a side portion provided at each of both sides of the central portion in a full width direction of the central portion, wherein the side portion may have a tapered shape having a thickness that gradually decreases from the inside to the outside, which are connected to the central portion.

The electrode tab may include a central portion and a side portion provided at each of both sides of the central portion in a full width direction of the electrode tab, wherein the side portion may have a size less than that of the central portion in a full length and thickness direction of the central portion.

An outer surface of the reinforcing member provided on the side portion and an outer surface of the central portion may be provided on the same horizontal line.

One or more insertion holes may be formed in the side portion of the electrode tab, and the reinforcing member may be provided with an insertion protrusion which is inserted into each of the insertion holes.

The reinforcing member may have strength greater than that of the electrode tab.

The reinforcing member may be made of any one material of an insulating material and a flexible material.

The reinforcing member may be made of a material having a thickness greater than that of the electrode tab.

The reinforcing member may be provided on one surface of the side portion of the electrode tab to increase in thickness of the side portion of the electrode tab, thereby reinforcing strength of the electrode tab.

The reinforcing member may include one front surface attached to a front side of the side portion, one top surface attached to a top surface of the side portion, and one bottom surface attached to a bottom surface of the side portion, and one side surface provided on a side surface of the side portion.

A secondary battery of the present invention may include the electrode tab assembly.

### ADVANTAGEOUS EFFECTS

The electrode tab assembly of the present invention includes a reinforcing member provided at a side portion of the electrode tab. Due to such a feature, the strength of the side portion of the electrode tab may be reinforces, and thus, the electrode tab may be prevented from being deformed such as being folded or destroyed, thereby preventing the secondary battery including the electrode tab assembly from being short-circuited, exploded, and ignited.

Particularly, in the electrode tab assembly of the present invention, the electrode tab may include the side portion. The side portion may have a tapered shape or has a size less than the overall length and thickness of the central portion. Due to this feature, the reinforcing member provided on the side portion and the surface of the central portion may be aligned on the same horizontal line to prevent the height difference from occurring between the reinforcing member and the central portion, thereby improving the adhesion and bonding force between the electrode tab assembly and the electrode.

### BRIEF DESCRIPTION OF THE DRAWINGS

FIG. 1 is a cross-sectional view of a secondary battery according to a first embodiment of the present invention.
FIG. 2 is a perspective view of an electrode tab assembly according to a second embodiment of the present invention.
FIG. 3 is a front view of the electrode tab assembly according to the first embodiment of the present invention.
FIG. 4 is a side view of the electrode tab assembly according to the first embodiment of the present invention.
FIG. 5 is a plan view of the electrode tab assembly according to the first embodiment of the present invention.
FIG. 6 is a cross-sectional view taken along line A-A of FIG. 3.
FIG. 7 is a front view of an electrode tab assembly according to a second embodiment of the present invention.
FIG. 8 is a plan view of the electrode tab assembly according to the second embodiment of the present invention.
FIG. 9 is a front view of an electrode tab assembly according to a third embodiment of the present invention.
FIG. 10 is a plan view of the electrode tab assembly according to the third embodiment of the present invention.
FIG. 11 is a front view of an electrode tab assembly according to a fourth embodiment of the present invention.
FIG. 12 is a cross-sectional view taken along line B-B of FIG. 11.
FIG. 13 is a perspective view of an electrode tab assembly according to a fifth embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Secondary battery according to first embodiment of the present invention]

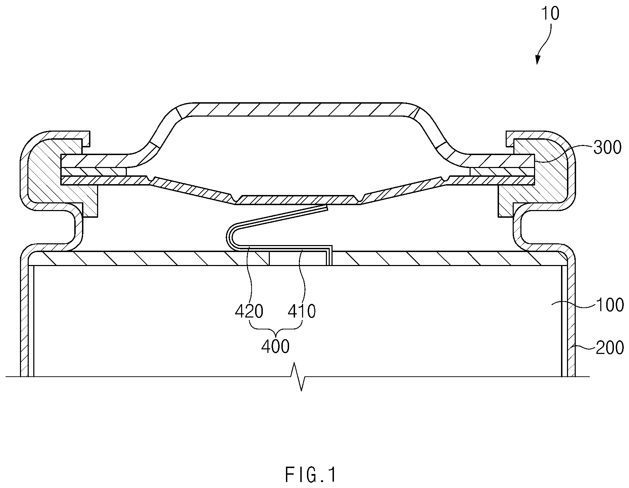

As illustrated in FIG. 1, a secondary battery 10 according to a first embodiment of the present invention is a cylindrical secondary battery and includes an electrode assembly 100, a can 200 accommodating the electrode assembly 100, and a cap assembly 300 mounted in an opening of the can 200. In addition, the electrode assembly 100 has a structure in which an electrode 110 and a separator are stacked and wound in a jelly-roll form. Here, the electrode 110 includes a positive electrode and a negative electrode.

The positive electrode is connected to the cap assembly 300 through a positive electrode tab assembly, and the negative electrode is connected to the can 200 through a negative electrode tab assembly. The positive electrode tab assembly and the negative electrode tab assembly constitute an electrode tab assembly, and the electrode tab assembly is coupled to a non-coating portion of the electrode without an electrode active material through welding.

The secondary battery 10 has a problem in that deformation such as folding or destruction of the electrode tab assembly occurs during a manufacturing process or a safety evaluation process. Particularly, when the destroyed electrode tab assembly and the electrode 110 having a different polarity are in contact with each other, there is a problem in that short circuit, explosion, and ignition occur.

In order to solve this problem, the secondary battery 10 according to the first embodiment of the present invention may improve the electrode tab assembly to reinforce strength, thereby preventing the electrode tab assembly from being deformed such as being folded or destroyed, resulting in previously preventing accidents such as the short circuit, the explosion, and the ignition due to the electrode tab assembly from occurring.

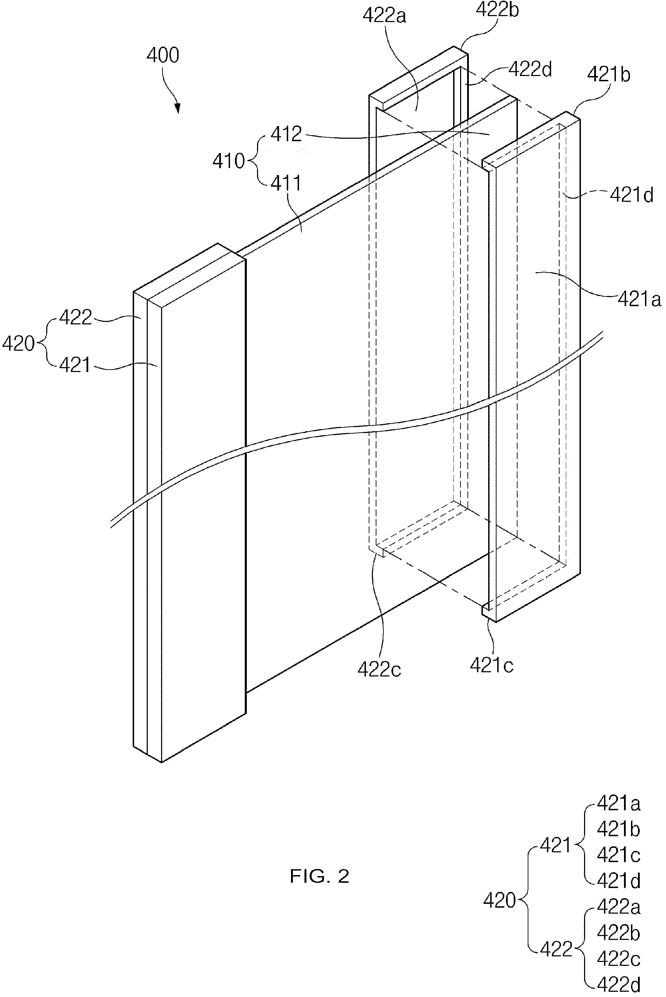

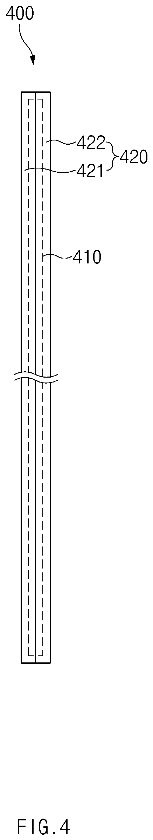

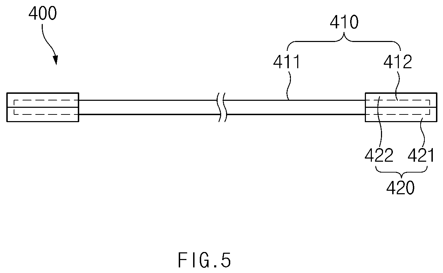

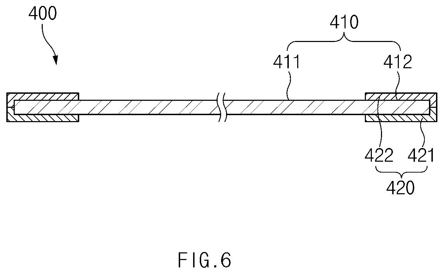

That is, as illustrated in FIGS. 2 to 6, the electrode tab assembly 400 according to the first embodiment of the present invention includes an electrode tab 410 and a reinforcing member 420 reinforcing the strength of the electrode tab 410.

The electrode tab 410 is configured to connect the positive electrode, which is an electrode, to the cap assembly, or connect the negative electrode, which is the electrode, to the can 200. That is, the electrode tab 410 is coupled to the non-coating portion of the electrode 110 through the welding. The electrode tab 410 may be made of a metal material, and preferably, the electrode tab 410 may be made of an aluminum (Al) or nickel (Ni) material.

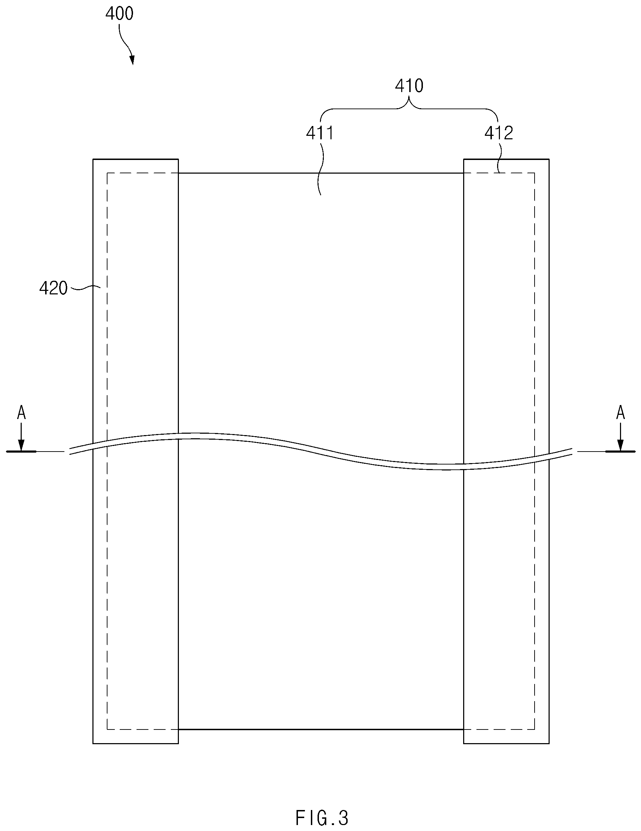

The reinforcing member 420 is configured to reinforce the strength of the side portion 412 of the electrode tab 410 to prevent the electrode tab 410 from being deformed such as being folded or destroyed. That is, the reinforcing member 420 is provided on each of the side portions (left and right portions of the electrode tab when viewed in FIG. 3) in a full width direction of the electrode tab 410, and the side portion of the electrode tab may increase in thickness to reinforce the strength of the electrode tab 410, thereby preventing the electrode tab 410 from being deformed.

That is, the reinforcing member 420 may be provided in a shape that surrounds the side portion 412 of the electrode tab 410 to reinforce the strength of the side portion 412 of the electrode tab 410 by a thickness of the reinforcing member 420.

Particularly, the reinforcing member 420 may be made of a material having elasticity and restoring force. Accordingly, even if the electrode tab 410 is deformed, the electrode tab 410 may be restored to its original shape by the reinforcing member 420 to prevent the electrode tab 410 from being deformed.

The electrode tab assembly 400 having such a structure may be connected to the electrode through the central portion 411 of the electrode tab 410, and the strength of the side portion of the electrode tab 410 may be reinforced through the reinforcing member provided on the side portion 412 of the electrode tab 410 to prevent the electrode tab 410 from being deformed such as being folded or destroyed.

In more detail, even if the side portion 412 of the electrode tab assembly 400 is caught on an external object during the manufacturing process or the safety evaluation process of the electrode assembly 100, since the strength of the side portion 412 of the electrode tab 410 is reinforced by the reinforcing member 420, the electrode tab 410 may be prevented from being deformed as being folded or destroyed.

The reinforcing member 420 has a structure that is capable of being conveniently coupled to the side portion 412 of the electrode tab 410.

That is, the reinforcing member 420 includes one reinforcing piece 421 and the other reinforcing piece 422, which are respectively provided at front and rear sides of the side portion 412 of the electrode tab 410 and then coupled to each other to increase in thickness of the side portion 412 of the electrode tab 410, thereby reinforcing the strength of the electrode tab 410. The one reinforcing piece 421 and the other reinforcing piece 422 may reinforce the strength of the side portion 412 of the electrode tab 410 while being coupled to surround the side portion 412 of the electrode tab 410.

Here, the one reinforcing piece 421 and the other reinforcing piece 421 and 422 may have a symmetrical shape with respect to the electrode tab 410. This may be improved in ease and compatibility of manufacturing the reinforcing member 420. On the other hand, the one reinforcing piece 421 and the other reinforcing piece 422 may be bonded to each other through thermal fusion or an adhesive.

That is, the one reinforcing piece 421 includes a front surface 421a provided in front of the side portion 412, one top surface 421b provided at one side of a top surface of the side portion 412, one bottom surface 421c provided at one side of a bottom surface of the side portion 412, and one side surface 421d provided at one side of the side surface of the side portion 412.

In addition, the other reinforcing piece 422 includes a rear surface 422a provided behind the side portion 412, the other top surface 422b provided at the other side of the top surface of the side portion 412, the other bottom surface 422c provided at the other side of the bottom surface of the side portion 412, and the other side surface 422d provided at the other side of the side surface of the side portion 412.

Thus, when the one reinforcing piece 421 and the other reinforcing piece 422 are coupled to each other, the front surface 421a may reinforce strength of a front side of the electrode tab 410 while covering the front side of the electrode tab 410, the rear surface 422a may reinforce strength of a rear side of the electrode tab 410 while covering the rear side of the electrode tab 410. Also, the one top surface 421b and the other top surface 422b are coupled to each other to reinforce strength of a top surface of the side portion 412 while covering the top surface of the side portion 412, the one bottom surface 421c and the other bottom surface 422c are coupled to each other to reinforce strength of a bottom surface of the side portion 412 while covering the bottom surface of the side portion 412, and the one side surface 421d and the other side surface 422d are coupled to each other to reinforce strength of a side surface of the side portion 412 while covering the side surface of the side portion 412.

Accordingly, the reinforcing member 420 may increase in thickness of the side portion 412 of the electrode tab 410 to stably cover the side portion of the electrode tab, thereby improving the strength of the electrode tab 410.

The reinforcing member 420 may be made of an insulating material and a flexible material. That is, the insulating material may block electricity from passing by the reinforcing member 420, and as a result, safety may be improved. The flexible material may prevent the reinforcing member 420 from being destroyed by an external object, and in particular, even if the electrode tab 410 to which the reinforcing member 420 is coupled is deformed, the electrode tab 410 may be restored to its original shape by restoring force of the reinforcing member 420, and as a result, the electrode tab 410 may be largely prevented from being deformed.

For example, the reinforcing member 420 may be made of a polymer material, and the polymer material may be polypropylene or polyethylene oxide. The reinforcing member 420 is made of any one of polypropylene, polyethylene oxide, polyethylene, ethylene vinyl acetate, and rubber and also is used only as a single material.

The reinforcing member 420 may be made of the same material as the electrode tab 410 to reinforce the strength of the electrode tab and increase in adhesion area between the electrode tab and an electrode lead, thereby preventing the conductivity from being weakened.

The one reinforcing piece 421 and the other reinforcing piece 422 may be detachably coupled to the electrode tab 410. That is, a groove and a protrusion, which are coupled to each other, may be provided on a corresponding surfaces of the one reinforcing piece 421 and the other reinforcing piece 422. In other words, the groove may be provided in the corresponding surface of the one reinforcing piece, and the protrusion coupled to the groove of the one reinforcing piece may be provided on the corresponding surface of the other reinforcing piece. Thus, when transferring the electrode assembly, the reinforcing member is coupled to the electrode tab to prevent the electrode tab from being deformed, and when the electrode assembly is accommodated in the can, the reinforcing member coupled to the electrode tab is detached to prevent accidents that may occur due to the reinforcing member from occurring.

The reinforcing member and the electrode tab may be coupled to each other by thermal fusion.

The reinforcing member 420 may be made of a material having strength greater than that of the electrode tab 410. That is, if the material is stronger than the electrode tab, the material may be used for the reinforcing member. A manufacturing cost may be greatly reduced.

The reinforcing member 420 may be provided to be thicker than the electrode tab 410. For example, the reinforcing member 420 may be provided to have a thickness of 1.1 times to 2 times the thickness of the electrode tab 410. Thus, the thickness of the side portion of the electrode tab 410 may effectively increase to reinforce the strength.

Therefore, the secondary battery 10 according to the first embodiment of the present invention may include the electrode tab assembly 400 provided with the electrode tab 410 and the reinforcing member 420 to increase in thickness of the electrode tab 410, thereby reinforcing the strength. Therefore, the electrode tab 410 may be prevented from being deformed, and as a result, the safety may be improved.

Hereinafter, in descriptions of another embodiment of the present invention, constituents having the same function as the above-mentioned embodiment have been given the same reference numeral in the drawings, and thus duplicated description will be omitted.

### [Secondary battery according to second embodiment of the present invention]

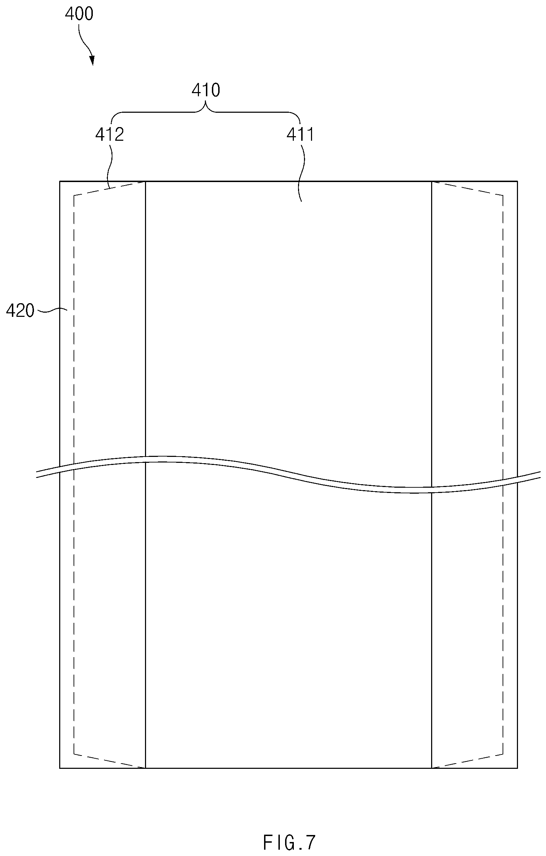

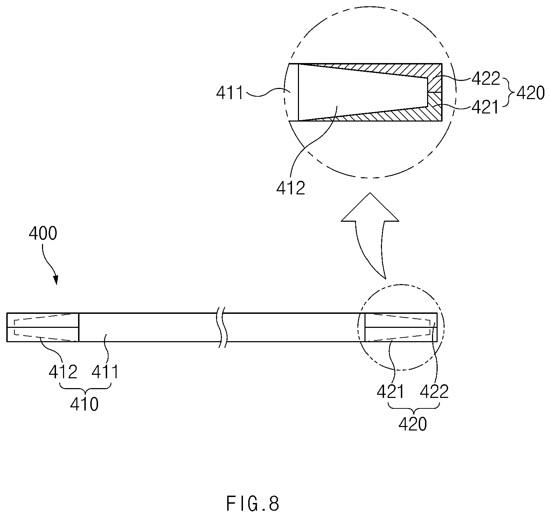

As illustrated in FIGS. 7 and 8, a secondary battery 10 according to a second embodiment of the present invention includes an electrode tab assembly 400. The electrode tab assembly 400 includes an electrode tab 410 and a reinforcing member 420 provided on a side portion 412 of the electrode tab 410.

The electrode tab 410 includes a central portion 411 and a side portion 412 provided at each of both sides of the central portion 411 in a full width direction of the central portion 411. The side portion 412 has a tapered shape in which a length and thickness of the central portion 411 gradually decrease from the inside to the outside, which are connected to the central portion 411.

That is, referring to FIG. 7, each of an upper end and a lower end of the side portion 412, which are connected to an upper end and a lower end in the full length direction of the central portion 411 is tapered to gradually decrease in width from the inside to the outside (a direction of the side portion when viewed in FIG. 7). In addition, referring to FIG. 8, each of front and rear sides of the side portion 412, which are respectively connected to a front surface 421a and a rear surface 422a, has a tapered shape having a thickness (length between the front and rear sides of the side portion 412) that gradually decreases from the inside to the outside.

In other words, the reinforcing member is coupled to an empty space that is formed because the side portion 412 is provided to have a size less than that of the central portion 411, and thus, the electrode tab assembly 400 may be prevented from increasing in thickness by the reinforcing member 420.

Here, the reinforcing member 420 is made of a material having greater strength than that of the electrode tab.

Particularly, an outer surface of the reinforcing member 420, which is provided on the side portion 412, and an outer surface of the central portion 411, which correspond to each other, may be provided on the same horizontal line, and thus, since a height different between the central portion 411 and the reinforcing member 420 does not exist, adhesion and bonding force between the electrode tabs 410 and the electrodes may be improved.

In the second embodiment of the present invention, it has been described that the side portion 412 is formed in the tapered shape, but the side portion 412 may also be formed in a triangular pyramid shape that decreases in width from the inside to the outside, which are connected to the central portion 411.

### [Secondary battery according to third embodiment of the present invention]

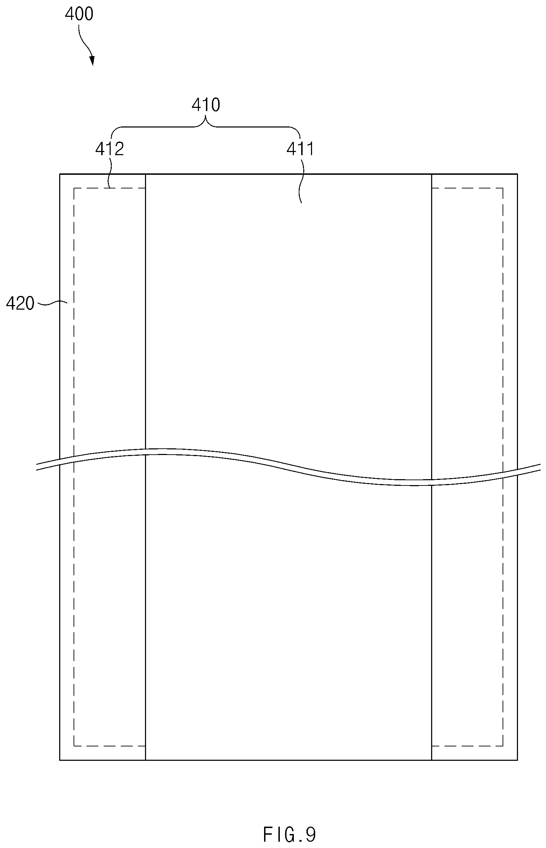

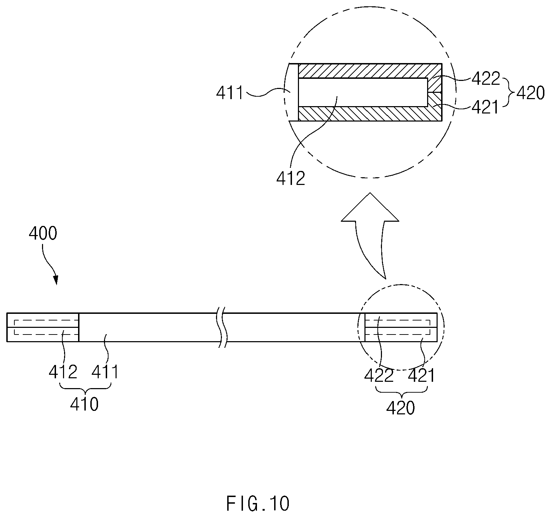

As illustrated in FIGS. 9 and 10, a secondary battery 10 according to a third embodiment of the present invention includes an electrode tab assembly 400. The electrode tab assembly 400 includes an electrode tab 410 and a reinforcing member 420 provided on a side portion 412 of the electrode tab 410.

Here, the electrode tab 410 includes a central portion 411 and a side portion 412 provided on each of both sides of the central portion 411 in a full width direction of the central portion 411. Here, the side portion 412 includes the central portion 411 having a size less than that in the full length and thickness direction of the central portion 411.

That is, when viewed in the full length direction of the electrode tab 410, each of upper and lower ends of the side portion 412 has a length less than that of each of upper and lower ends of the central portion 411, and when viewed in the thickness direction of the electrode tab 410, the side portion 412 has a thickness less than that of the central portion 411.

Accordingly, the reinforcing member is coupled to an empty space that is formed because the side portion 412 is provided to have a size less than that of the central portion 411, and thus, the electrode tab assembly 400 may be prevented from increasing in thickness by the reinforcing member 420.

Here, the reinforcing member is made of a material having greater strength than that of the electrode tab.

Particularly, an outer surface of the reinforcing member 420, which is provided on the side portion 412, and an outer surface of the central portion 411, may be provided on the same horizontal line, and thus, since a height different between the central portion 411 and the reinforcing member 420 does not exist, adhesion force between the electrode tabs 410 and the electrodes may be improved.

### [Secondary battery according to fourth embodiment of the present invention]

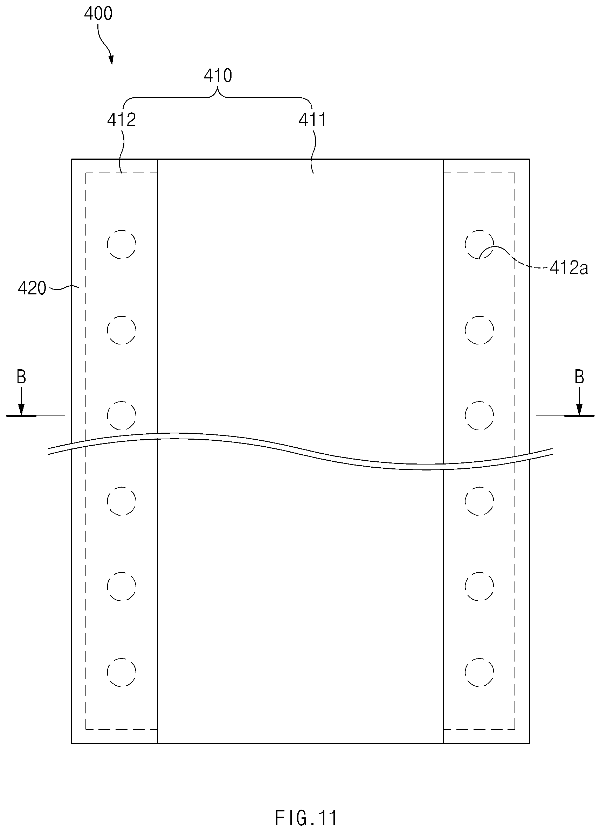

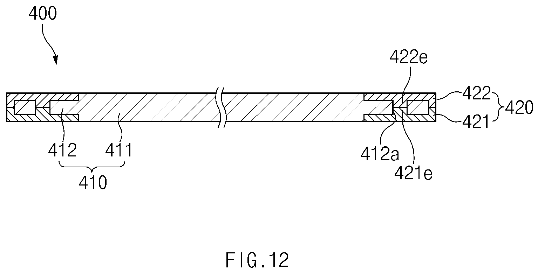

As illustrated in FIGS. 11 and 12, a secondary battery 10 according to a fourth embodiment of the present invention includes an electrode tab assembly 400. The electrode tab assembly 400 includes an electrode tab 410 and a reinforcing member 420 provided on a side portion 412 of the electrode tab 410.

Here, one or more insertion holes 412a are formed in the side portion 412 of the electrode tab 410, and the reinforcing member 420 is provided with an insertion protrusion to be inserted into each of the insertion holes 412a. The insertion protrusion includes one insertion protrusion 421e provided at one side of the reinforcing piece 421 and the other reinforcing protrusion 422e provided on the other reinforcing piece 422.

Thus, in the secondary battery 10 according to the fourth exemplary embodiment of the present invention, the insertion protrusion may be coupled to the insertion groove to improve coupling force between the electrode tab 410 and the reinforcing member 420.

### [Secondary battery according to fifth embodiment of the present invention]

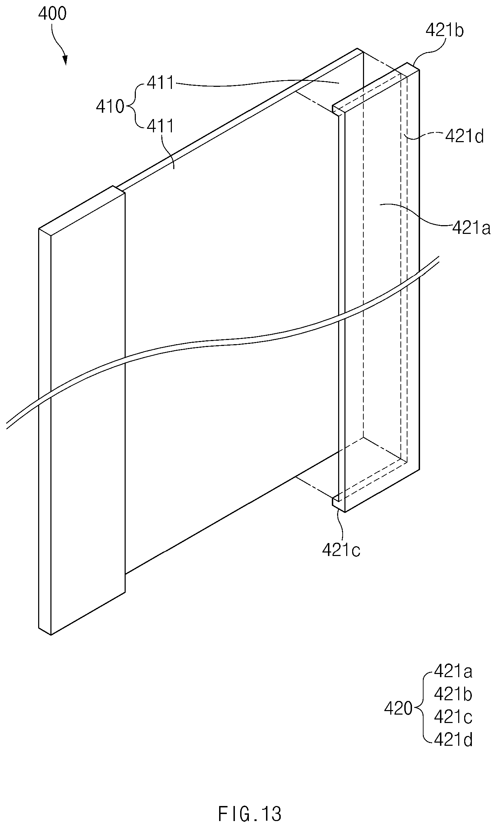

As illustrated in FIG. 13, a secondary battery 10 according to a fifth embodiment of the present invention includes an electrode tab assembly 400. The electrode tab assembly 400 includes an electrode tab 410 and a reinforcing member 420 provided on a side portion 412 of the electrode tab 410.

Here, the reinforcing member 420 may be provided only on one surface provided on the side portion of the electrode tab. That is, the reinforcing member 420 may be provided only in front of the side portion of the electrode tab when viewed in FIG. 13. Thus, the side portion of the electrode tab may increase in thickness to reinforce strength of the reinforcing member.

For example, the reinforcing member 420 may include a front surface 421a attached to a front side of the side portion 412, a top surface 421b attached to a top surface of the side portion 412, and a bottom surface 421c attached to a bottom surface of the side portion 412, and a side surface 421d provided on a side surface of the side portion.

Therefore, the secondary battery 10 according to the fifth embodiment of the present invention may include the reinforcing member on the one surface provided on the side portion of the electrode tab to increase in thickness of the side portion of the electrode tab, thereby reinforcing the strength of the side portion of the electrode tab.

### [Description of the Symbols]

- 10:: Secondary battery
- 100:: Electrode assembly
- 110:: Electrode
- 200:: Can
- 300:: Cap assembly
- 400:: Electrode tab assembly
- 410:: Electrode tab
- 411:: Central portion
- 412:: Side portion
- 412a:: Insertion hole
- 420:: Reinforcing member
- 421:: One reinforcing piece
- 421a:: Front surface
- 421b:: One top surface
- 421c:: One bottom surface
- 421d:: One side surface
- 421e:: Insertion protrusion
- 422:: The other reinforcing piece
- 422a:: Rear surface
- 422b:: The other top surface
- 422c:: The other bottom surface
- 422d:: The other side surface
- 422e:: Insertion protrusion

## Claims

1. An electrode tab assembly (400) comprising:
an electrode tab (410); and
a reinforcing member (420) provided on a side portion (412) of the electrode tab (410) in a width direction to reinforce strength of the side portion (412) of the electrode tab (410), thereby preventing the electrode tab (410) from being deformed,
wherein the reinforcing member (420) comprises a first reinforcing piece (421) and a second reinforcing piece (422), which are respectively provided at front and rear sides of the side portion (412) of the electrode tab (410) and coupled to each other to surround the side portion (412) of the electrode tab (410) so that the electrode tab (410) increases in thickness,
wherein the first reinforcing piece (421) comprises:
a front surface (421a) provided at the front side of the side portion (412),
one top surface (421b) provided at one side of a top surface of the side portion (412),
one bottom surface (421c) provided at one side of a bottom surface of the side portion (412), and
one side surface (421d) provided at one side of a side surface of the side portion (412), and
wherein the second reinforcing piece (422) comprises:
a rear surface (422a) provided at the rear side of the side portion (412),
the other top surface (422b) provided at the other side of the top surface of the side portion (412),
the other bottom surface (422c) provided at the other side of the bottom surface of the side portion (412), and
the other side surface (422d) provided at the other side of the side surface of the side portion (412).

2. The electrode tab assembly (400) of claim 1, wherein the first reinforcing piece (421) and the second reinforcing piece (422) have a symmetrical shape with respect to the electrode tab (410).

3. The electrode tab assembly (400) of claim 1, wherein the one top surface (421b) and the other top surface (422b) are coupled to each other to cover the top surface of the side portion (412),
the one bottom surface (421c) and the other bottom surface (422c) are coupled to each other to cover the bottom surface of the side portion (412), and
the one side surface (421d) and the other side surface (422d) are coupled to each other to cover the side surface of the side portion (412).

4. The electrode tab assembly (400) of claim 1, wherein one or more insertion holes (412a) are formed in the side portion (412) of the electrode tab (410), and
the reinforcing member (420) is provided with an insertion protrusion (422e) which is inserted into each of the insertion holes (412a).

5. The electrode tab assembly (400) of claim 1, wherein the reinforcing member (420) has strength greater than that of the electrode tab (410).

6. The electrode tab assembly (400) of claim 1, wherein the reinforcing member (420) is made of any one material of an insulating material and a flexible material.

7. The electrode tab assembly (400) of claim 1, wherein the reinforcing member (420) is made of a material having a thickness greater than that of the electrode tab (410).

8. A secondary battery (10) comprising the electrode tab assembly (400) of claim 1.

## Patentansprüche

1. Elektrodenlaschenanordnung (400) aufweisend:
eine Elektrodenlasche (410); und
ein Verstärkungselement (420), das an einem Seitenabschnitt (412) der Elektrodenlasche (410) in einer Breitenrichtung bereitgestellt ist, um die Festigkeit des Seitenabschnitts (412) der Elektrodenlasche (410) zu verstärken, wodurch Verformung der Elektrodenlasche (410) verhindert wird,
wobei das Verstärkungselement (420) ein erstes Verstärkungsstück (421) und ein zweites Verstärkungsstück (422) aufweist, die jeweils an einer Vorderseite und einer Rückseite des Seitenabschnitts (412) der Elektrodenlasche (410) bereitgestellt und miteinander gekoppelt sind, um den Seitenabschnitt (412) der Elektrodenlasche (410) zu umgeben, so dass eine Dicke der Elektrodenlasche (410) zunimmt,
wobei das erste Verstärkungsstück (421) aufweist:
eine Vorderfläche (421a), die an der Vorderseite des Seitenabschnitts (412) bereitgestellt ist,
eine obere Fläche (421b), die an einer Seite einer oberen Fläche des Seitenabschnitts (412) bereitgestellt ist,
eine untere Fläche (421c), die an einer Seite einer unteren Fläche des Seitenabschnitts (412) bereitgestellt ist, und
eine Seitenfläche (421d), die an einer Seite einer Seitenfläche des Seitenabschnitts (412) bereitgestellt ist, und
wobei das zweite Verstärkungsstück (422) aufweist:
eine Rückfläche (422a), die an der Rückseite des Seitenabschnitts (412) bereitgestellt ist,
die andere obere Fläche (422b), die an der anderen Seite der oberen Fläche des Seitenabschnitts (412) bereitgestellt ist,
die andere untere Fläche (422c), die an der anderen Seite der unteren Fläche des Seitenabschnitts (412) bereitgestellt ist, und
die andere Seitenfläche (422d), die an der anderen Seite der Seitenfläche des Seitenabschnitts (412) bereitgestellt ist.

2. Elektrodenlaschenanordnung (400) nach Anspruch 1, wobei das erste Verstärkungsstück (421) und das zweite Verstärkungsstück (422) eine symmetrische Form bezüglich der Elektrodenlasche (410) aufweisen.

3. Elektrodenlaschenanordnung (400) nach Anspruch 1, wobei die eine obere Fläche (421b) und die andere obere Fläche (422b) miteinander gekoppelt sind, um die obere Fläche des Seitenabschnitts (412) abzudecken,
die eine untere Fläche (421c) und die andere untere Fläche (422c) miteinander gekoppelt sind, um die untere Fläche des Seitenabschnitts (412) abzudecken, und
die eine Seitenfläche (421d) und die andere Seitenfläche (422d) miteinander gekoppelt sind, um die Seitenfläche des Seitenabschnitts (412) abzudecken.

4. Elektrodenlaschenanordnung (400) nach Anspruch 1, wobei ein oder mehrere Einführlöcher (412a) in dem Seitenabschnitt (412) der Elektrodenlasche (410) ausgebildet sind, und
das Verstärkungselement (420) mit einem Einführvorsprung (422e) versehen ist, der in jedes der Einführlöcher (412a) eingeführt ist.

5. Elektrodenlaschenanordnung (400) nach Anspruch 1, wobei das Verstärkungselement (420) eine Festigkeit aufweist, die größer als die der Elektrodenlasche (410) ist.

6. Elektrodenlaschenanordnung (400) nach Anspruch 1, wobei das Verstärkungselement (420) aus einem beliebigen Material aus einem isolierenden Material und einem flexiblen Material hergestellt ist.

7. Elektrodenlaschenanordnung (400) nach Anspruch 1, wobei das Verstärkungselement (420) aus einem Material hergestellt ist, das eine Dicke aufweist, die größer als die der Elektrodenlasche (410) ist.

8. Sekundärbatterie (10) aufweisend die Elektrodenlaschenanordnung (400) nach Anspruch 1.

## Revendications

1. Ensemble de languette d'électrode (400) comprenant :
une languette d'électrode (410) ; et
un élément de renforcement (420) agencé sur une partie latérale (412) de la languette d'électrode (410) dans le sens de la largeur, afin de renforcer la résistance de la partie latérale (412) de la languette d'électrode (410), en empêchant ainsi la déformation de la languette d'électrode (410),
l'élément de renforcement (420) comprenant une première pièce de renforcement (421) et une deuxième pièce de renforcement (422), agencées respectivement sur les côtés antérieur et postérieur de la partie latérale (412) de la languette d'électrode (410), et couplées l'une à l'autre pour entourer la partie latérale (412) de la languette d'électrode (410), de sorte que l'épaisseur de la languette d'électrode (410) augmente,
la première pièce de renforcement (421) comprenant :
une surface antérieure (421a) agencée sur le côté antérieur de la partie latérale (412),
une surface supérieure (421b) agencée sur un côté d'une surface supérieure de la partie latérale (412),
une surface inférieure (421c) agencée sur un côté d'une surface inférieure de la partie latérale (412), et
une surface latérale (421d) agencée sur un côté d'une surface latérale de la partie latérale (412),
la deuxième pièce de renforcement (422) comprenant :
une surface postérieure (422a) agencée sur le côté postérieur de la partie latérale (412),
l'autre surface supérieure (422b) agencée sur l'autre côté de la surface supérieure de la partie latérale (412),
l'autre surface inférieure (422c) agencée sur l'autre côté de la surface inférieure de la partie latérale (412), et
l'autre surface latérale (422d) agencée sur l'autre côté de la surface latérale de la partie latérale (412),

2. Ensemble de languette d'électrode (400) selon la revendication 1, la première pièce de renforcement (421) et la deuxième pièce de renforcement (422) ayant une forme symétrique relativement à la languette d'électrode (410).

3. Ensemble de languette d'électrode (400) selon la revendication 1, l'une surface supérieure (421b) et l'autre surface supérieure (422b) étant couplées l'une à l'autre de façon à couvrir la surface supérieure de la partie latérale (412),
l'une surface inférieure (421c) et l'autre surface inférieure (422c) étant couplées l'une à l'autre de façon à couvrir la surface inférieure de la partie latérale (412),
l'une surface latérale (421d) et l'autre surface latérale (422d) étant couplées l'une à l'autre de façon à couvrir la surface latérale de la partie latérale (412)

4. Ensemble de languette d'électrode (400) selon la revendication 1, un ou plusieurs orifices d'insertion (412a) étant formés dans la partie latérale (412) de la languette d'électrode (410), et
l'élément de renforcement (420) étant agencé avec une saillie d'insertion (422e) insérée dans chacun des orifices d'insertion (412a).

5. Ensemble de languette d'électrode (400) selon la revendication 1, la résistance de l'élément de renforcement (420) étant supérieure à celle de la languette d'électrode (410).

6. Ensemble de languette d'électrode (400) selon la revendication 1, l'élément de renforcement (420) étant réalisé avec un matériau quelconque d'un matériau isolant et d'un matériau flexible.

7. Ensemble de languette d'électrode (400) selon la revendication 1, l'élément de renforcement (420) étant réalisé avec un matériau dont l'épaisseur est supérieure à celle de la languette d'électrode (410).

8. Batterie secondaire (10) comprenant l'ensemble de languette d'électrode (400) selon la revendication 1.
